# EUROPEAN PATENT APPLICATION

(11) **EP 4 557 746 A1**
(43) Date of publication of application: **21.05.2025**
(21) Application number: 23383177.5
(22) Date of filing: 17.11.2023
(51) Int. Cl.: H04N 21/235, H04N 21/431, H04N 21/462, H04N 21/4722, H04N 21/61, H04N 21/658, H04N 21/858

(54) **METHOD FOR CONTROLLING A DISPLAY APPARATUS**

(71) Applicant: García Crespo, Ángel, 28045 Madrid (ES); Matheus Chacín, Carlos Alberto, 28904 Getafe (ES); Fuenmayor González, Francisco Javier, 28911 Leganés (ES); Unuware, S.L., 28919 Leganés (ES)
(72) Inventor: GARCÍA CRESPO, Ángel, 28045 Madrid (ES); MATHEUS CHACÍN, Carlos Alberto, 28904 Getafe (ES); FUENMAYOR GONZÁLEZ, Francisco Javier, 28911 Leganés (ES)
(74) Representative: TRBL Intellectual Property

(57) **Abstract**

The invention provides a method of controlling a display apparatus (1). Initially, the display apparatus (1) receives a first data package (4), which includes video data, audio data and HbbTV metadata about a plurality of channels from the primary source. The user selects one of the channels and the display apparatus (1) uses the HbbTV metadata to connect to a multimedia website (2). The multimedia website (2) sends a response with a plurality of browser options and the user sends a multimedia command (5) to the multimedia website (2) containing one of the browser options. The multimedia website (2) obtains a multimedia package related to the multimedia command, the multimedia package containing multimedia elements. Then, the multimedia website (2) processes the multimedia package and obtains a multimedia sequence, wherein the multimedia sequence contains an ordered sequence of the multimedia elements. Finally, the display apparatus (1) shows the multimedia sequence on top of the video data of the first data package.

## Description

### TECHNICAL FIELD

This invention belongs to the field of telecommunications, and more particularly, to the accessibility services provided by the same.

### STATE OF THE ART

There is an increasing demand of Internet video and Internet TV. One of the solutions is Hybrid Broadcast Broadband TV (HbbTV) which is a hybrid system which combines a common TV stream (Broadcast) with additional content obtained from an Internet browser (Broadband).

When the user is connected to a specific channel, the TV receives a first information package (the so-called Transport Stream, TS) received from the TV provider, usually by TDT. This TS contains audio data, video data. In some cases, it also contains HbbTV metadata (amongst other metadata) for a plurality of channels.

Once the user selects one particular channel from the first information package, the TV uses the HbbTV metadata of the first information package to connect to a web browser, which provides a second information package. This web browser is specific for the particular channel which has been chosen and establishes an information exchange (which can be bidirectional) between the TV and the web browser.

The TV has a software middleware program which is configured to show the information of the webpage on top of the video data and audio data of the particular channel.

However, if the web browser tries to reproduce a video file or an audio file, this video file or audio file overrides the video signal from the TS, so cannot be displayed in the TV at the same time as the primary video signal. This means, for example, that a video with real-time sign language interpretation cannot be shown at the same time as the TV program. The same happens with an audio file (for example, real-time dubbing). A solution for this problem is sought.

### DESCRIPTION OF THE INVENTION

The invention provides an alternative solution for smart film displays by means of a device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method of controlling a display apparatus, the display apparatus being configured to receive video data from a primary source and multimedia data from a secondary source and to overlay the multimedia data atop the video data, the method comprising the steps of:
the display apparatus receives a first data package comprising video data, audio data and Hybrid Broadcast Broadband Television (HbbTV) metadata about a plurality of channels from the primary source;
a user selects one of the channels;
the display apparatus interprets the HbbTV metadata to extract a URL information of the selected channel and initiates a connection request to connect to a multimedia website using the secondary source;
the multimedia website sends a response with an array of browser choices;
the user sends a multimedia command to the multimedia website containing one of the browser choices;
the multimedia website obtains a multimedia package related to the multimedia command, the multimedia package containing multimedia elements;
the multimedia website processes the multimedia package and obtains a multimedia sequence, wherein the multimedia sequence contains an ordered sequence of the multimedia elements; and
the display apparatus displays the multimedia sequence atop the video data of the first data package.

This method assumes that the first data package contains HbbTV metadata for the selected channel, since the method requires the HbbTV metadata. For those channels which do not involve HbbTV metadata, this method cannot be used.

With this method, the display apparatus is able to show the multimedia sequence atop the video data of the first data package, without overriding this video data. The fact that the multimedia information is represented as a sequence of multimedia elements (wherein the multimedia elements may be, for example, images, sound bits, image portions, letters or sentences, etc), allows the reproduction without overriding the video signal, so that the multimedia sequence and the video signal can be shown simultaneously.

In some particular embodiments, the step of the multimedia website obtaining a multimedia package comprises the substeps of:
the multimedia website sends a connection request to a server by using a designated channel connection tool and simultaneously queries the server for data availability of server information related to the multimedia command;
the server sends a response to the multimedia website with a multimedia package comprising real-time data related to the multimedia command, this real-time data serving as the multimedia package.

In these embodiments, the ability to show "real-time information" is combined with the main aim of the present invention, so that the information shown atop the video signal may be real-time related with the same.

In some particular embodiments, the designated channel connection tool is one of Web-socket, socket, API rest or standard browser download.

While Web-socket and socket are the most efficient connections for real-time data transmission, it is important to include also API rest and standard browser download, since these are also valid ways of transmitting this information.

In some particular embodiments, the server information comprises at least one of real-time text, real-time images and/or real-time audio data. In some particular embodiments, the step of processing the multimedia package includes receiving text and displaying the text on the multimedia website. In some particular embodiments, the step of processing the multimedia package includes receiving images and displaying a sequence of the images on the multimedia website. In some particular embodiments, the step of processing the multimedia package includes receiving sprite sheets and display a sequence of sections of the sprite sheets on the multimedia website.

A sprite sheet is an image file that contains several smaller graphics in a tiled grid arrangement. By compiling several graphics into a single file, a plurality of images may be obtained, with a single download.

In some particular embodiments, the step of processing the multimedia package includes receiving a GIF file and displaying the GIF file on the multimedia website. In some particular embodiments, the step of processing the multimedia package includes receiving audio information and playing back audio bytes in the multimedia website. In some particular embodiments, the step of processing the multimedia package includes receiving a URL address and displaying information retrieved from the URL address on the multimedia website.

There are some different examples of multimedia elements. Video elements may include a sign language video, images from other channels, advertisements, etc. Text elements may include translation, subtitles, description of images, etc. Examples of audio may include dubbing, description for blind people, emergency alerts, etc.

With all of these embodiments, the method is based on sending multimedia elements instead of calling to a video or audio reproduction. By sending a sequence of multimedia elements, the video signal of the first package is not overridden, and the examples above show different ways of obtaining this main aim.

In some particular embodiments, the method further comprising the steps of
the user sending an additional request to the display apparatus, the additional request containing a request to modify some features of the multimedia content;
the display apparatus transmitting instructions to the multimedia website;
the multimedia website updating some features of the multimedia content in accordance with the instructions and sending the modified multimedia content back to the display apparatus.

The fact that the sequence of multimedia elements is sent as a sequence of individual items allows this multimedia sequence to be customized via the first multimedia website, which can easily modify some of the features of the sent data.

In some particular embodiments, the features contained in the additional request include at least one of the following:
size of the additional content;
background colour of the additional content; or
position of the additional content.

These are only some examples of the customization which has been mentioned above. However, these features may provide advantages to the people that demand accessibility features.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows the standard operation of a Hybrid Broadcast Broadband Television (HbbTV) system.
Figure 2 shows some steps of a method according to the invention.

In these figures, the following reference numbers have been used:
- 1: TV
- 2: HbbTV website
- 3: Server
- 4: First data package - Transport Stream
- 5: Multimedia command
- 6: Connection request
- 7: Connection means
- 8: Response
- 9: TV provider
- 10: User

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

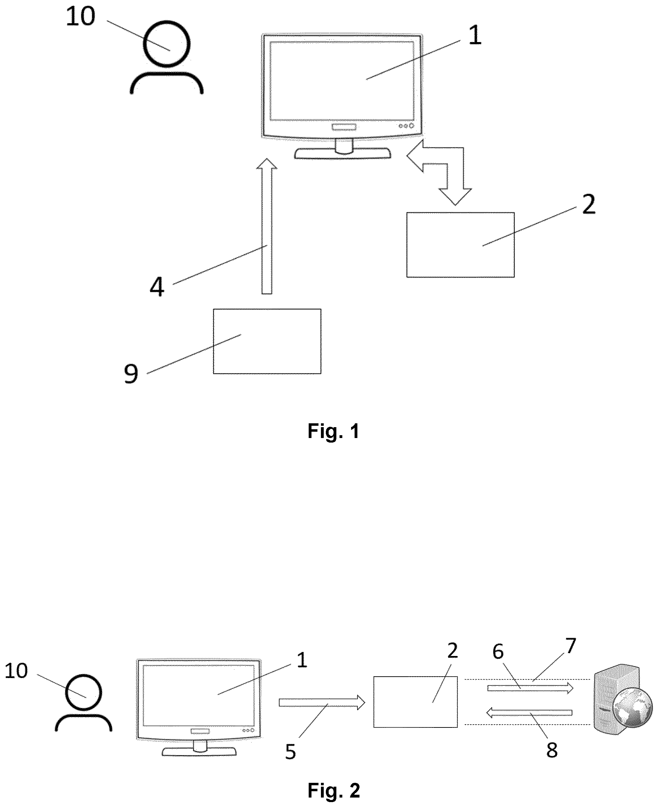

Figure 1 shows the standard operation of a Hybrid Broadcast Broadband Television (HbbTV) system. This system comprises a display apparatus 1 (a TV) with a circuit configured to execute a software compatible with the HbbTV standard. The system also comprises a TV provider 9, a HbbTV website 2 and a server 3.

The TV 1 receives a first data package 4 from the TV provider by means of a primary source (which is commonly the Terrestrial Digital Television). This first data package 4 is a Transport Stream (TS) which contains audio signal, video signal, HbbTV metadata and other metadata of different channels.

Then, the user 10 selects one of the channels. The TV 1 continues receiving the whole TS 4, which includes the video signal, audio signal, HbbTV metadata and other metadata of multiple channels, including the chosen one. However, the TV 1 only shows the video signal and audio signal of the selected channel. The HbbTV metadata of the chosen channel provides the TV 1 with the information necessary to point at the specific multimedia website 2 of the selected channel. Hence, the display apparatus interprets the HbbTV metadata to extract a URL information of the selected channel.

The multimedia website 2 may be reached directly (if the information provided by the HbbTV metadata points directly to its address) or indirectly (if the information provided by the HbbTV metadata points to a main webpage and then the user selects one link in this main webpage that redirects him to the multimedia website 2). In this last case, the user sends one connection request (by pressing one button, for example) so that the main webpage of the TV provider redirects the user to the multimedia website, which takes control of the multimedia data provision to the TV 1, by means of the secondary source (which is usually the Internet).

However, this multimedia website 2 is subject to the same conditions of the HbbTV standard: if the multimedia website 2 tries to reproduce a video file or an audio file, this video or audio file would override the video signal and audio signal from the TS 4, so the user could only see or listen to the video or audio file, but would stop seeing the TV channel.

By means of the inventive method of the invention, the TV 1 is going to be able to show real-time multimedia information (such as sign language interpretation) without overriding the video and audio signal of the TS.

Figure 2 shows some steps of this inventive method.

After the connection is established with the multimedia website 2, the user 10 is presented with a series of browser choices from the multimedia website (e.g., subtitles, signs language, dubbing, etc).

The user 10 selects one of the browser choices (for example, signs language, SL) and requests the TV 1 to send a multimedia command 5 ("show me SL on top of the video and audio signal", by means of one button or one arrow, for example) to the multimedia website 2, which is now in control of the multimedia data provision.

In this case, since the information is real-time, the multimedia website 2 sends a connection request 6 to a server 3 by means of a designated channel connection tool 7 (for example, Web-socket) and queries the server ("the user wants signs language") for data availability of server information related to the multimedia command.

The designated channel connection tool will be chosen depending on the type of information to be requested (Web-socket is preferred over the others due to their best efficiency in data transmission, but other connection means may be used if the information is displayed at the request of the TV, for example). Socket and web-socket are continuous connections, which are established once, while the other two methods (API rest or standard download) are connections which are established every time that a data exchange is performed.

The server 3 sends a response 8 to the multimedia website 2 with real-time server information related to the multimedia command 5. This real-time information is the information provided by the server which is related to the multimedia command 5 of the user. In this case, the server has a video with sign language interpretation and transforms this video into multimedia elements and sends these multimedia elements to the multimedia website 2.

These multimedia elements can be, for example, a GIF file (with different signs language frames) or a plurality of isolated images (one image per frame) or a sprite sheet (each sprite sheet containing a grid of images together with multimedia metadata, so that the multimedia website is provided with the necessary information to show a sequence of images). In any case, the GIF file, the individual images or the sprite sheet are "multimedia elements", they are not a video file or an audio file. The multimedia elements will be received and displayed in the multimedia website. The TV 1 will just reproduce the content of the multimedia website atop the video signal from the TS.

Concerning the real-time information, the use of this information may be strict real-time of real-time with the help of a buffer, which stores the information in advance to ensure that no lapses or gaps are produced.

The multimedia website processes the server information and display an acceptable sequence of images. In the case of the GIF file, the GIF file is reproduced as such. In the case of the sprite sheet, each portion of the sprite sheet (corresponding to a frame in the animation) is reproduced sequentially. In the case of the individual frames, they are also reproduced sequentially. This action is continually repeated, since the required information will demand a plurality of GIF files, a plurality of images and/or a plurality of sprite sheets.

The TV displays the content of the multimedia website atop the video signal from the TS.

Since the information from the multimedia website is a sequence of images, the video signal of the TS is not overridden, so the multimedia sequence is shown at the same time as the video signal from the TS.

Further, the user may request the TV to modify some features of the multimedia content (the signs language): the shape of the person, the position or the background colour (these are three examples, but can be more). To do so, the TV transmits some instructions to the multimedia website and the website changes features of the multimedia content in accordance with the user request.

## Claims

1. A method of controlling a display apparatus (1), the display apparatus (1) being configured to receive video data from a primary source and multimedia data from a secondary source and to overlay the multimedia data atop the video data, the method comprising the steps of:
the display apparatus (1) receives a first data package (4) comprising video data, audio data and Hybrid Broadcast Broadband Television (HbbTV) metadata about a plurality of channels from the primary source;
a user selects one of the channels;
the display apparatus (1) interprets the HbbTV metadata to extract a URL information of the selected channel and initiates a connection request to connect to a multimedia website (2) using the secondary source;
the multimedia website (2) sends a response with an array of browser choices;
the user sends a multimedia command (5) to the multimedia website (2) containing one of the browser choices;
the multimedia website (2) obtains a multimedia package related to the multimedia command, the multimedia package containing multimedia elements;
the multimedia website (2) processes the multimedia package and obtains a multimedia sequence, wherein the multimedia sequence contains an ordered sequence of the multimedia elements; and
the display apparatus (1) displays the multimedia sequence atop the video data of the first data package.

2. Method according to claim 1, wherein the step of the multimedia website obtaining a multimedia package comprises the substeps of:
the multimedia website (2) sends a connection request (6) to a server (3) using a designated channel connection tool (7) and simultaneously queries the server for data availability of server information related to the multimedia command; and
the server (3) sends a response (8) to the multimedia website (2) with a multimedia package comprising real-time data related to the multimedia command, this real-time data serving as the multimedia package.

3. Method according to claim 2, wherein the designated channel connection tool is one of Web-socket, socket, API rest or standard browser download.

4. Method according to any of claims 2 or 3, wherein the server information comprises at least one of real-time text, real-time images and/or real-time audio data.

5. Method according to any of the preceding claims, wherein the step of processing the multimedia package includes receiving text and displaying the text on the multimedia website.

6. Method according to any of the preceding claims, wherein the step of processing the multimedia package includes receiving images and displaying a sequence of the images on the multimedia website.

7. Method according to any of the preceding claims, wherein the step of processing the multimedia package includes receiving sprite sheets and display a sequence of sections of the sprite sheets on the multimedia website.

8. Method according to any of the preceding claims, wherein the step of processing the multimedia package includes receiving a GIF file and displaying the GIF file on the multimedia website.

9. Method according to any of the preceding claims, wherein the step of processing the multimedia package includes receiving audio information and playing back audio bytes in the multimedia website.

10. Method according to any of the preceding claims, wherein the step of processing the multimedia package includes receiving a URL address and displaying information retrieved from the URL address on the multimedia website.

11. Method according to any of the preceding claims, the method further comprising the steps of
the user sending an additional request to the display apparatus, the additional request containing a request to modify some features of the multimedia content;
the display apparatus transmitting instructions to the multimedia website;
the multimedia website updating some features of the multimedia content in accordance with the instructions and sending the modified multimedia content back to the display apparatus.

12. Method according to any of the preceding claims, wherein the features contained in the additional request include at least one of the following:
size of the additional content;
background colour of the additional content; or
position of the additional content.
